Europäisches Patentamt

European Patent Office

Office européen des brevets

(11) Publication number: **0 014 051**
A1

(12) **EUROPEAN PATENT APPLICATION**

(21) Application number: 80300089.2

(22) Date of filing: 09.01.80

(51) Int. Cl.³: **F 16 L 33/24**, F 16 L 33/26

(30) Priority: 11.01.79 GB 7901038

(43) Date of publication of application: 06.08.80
Bulletin 80/16

(84) Designated Contracting States: **AT BE CH DE FR GB IT LU NL SE**

(71) Applicant: **SUPERFLEXIT LIMITED, Leigh Road, Slough SL1 4BB (GB)**

(72) Inventor: **Kirby, Roy John, 13 Abbey Road, Chertsey Surrey KT16 8AL (GB)**

(74) Representative: **Evans, David Charles et al, F.J. CLEVELAND & COMPANY 40-43, Chancery Lane, London, WC2A 1JQ (GB)**

(54) **End fitting assembly for a conduit.**

(57) An end fitting assembly for a conduit comprises a nipple (10) adapted for insertion into an end of the conduit (35), a securing sleeve (22) adapted to overlay the nipple (10) entered into the conduit (35) and engagement means (33, 34) acting between the nipple (10) and the sleeve (22) to draw the nipple (10) and the sleeve (22) together to clamp a rucked portion of the conduit between the sleeve (22) and an abutment surface (17) on the nipple (10).

## DESCRIPTION

This invention relates to an end fitting assembly for a convoluted conduit.

According to the present invention there is provided an end fitting assembly for a convoluted conduit comprising:-

a nipple portion adapted for insertion into an end of said conduit,

an abutment surface on said nipple portion adapted to engage said conduit end,

a securing sleeve adapted to overlay said nipple portion entered into said conduit, and

engagement means acting between said nipple portion and said sleeve to draw said nipple portion said sleeve together to clamp a rucked portion of the conduit between said sleeve and said abutment surface.

The end fitting assembly may be provided with means for limiting relative movement of the nipple portion and the sleeve when the rucked portion has been clamped.

The limiting means may comprise an additional abutment surface of the nipple portion and an abutment surface of the sleeve.

The engagement means may be adapted to engage the sleeve and may be provided with a flange for engagement with the sleeve. The engagement means may comprise a cylindrical nut and the said flange may extend radially inwardly of the nut.

The nipple portion and the sleeve may be provided with convoluted surfaces for engagement with the conduit. The nipple portion may be provided with an inner circumferential recess.

- 4 -

The assembly may be provided with sealing means for sealing the assembly and the conduit and the sealing means may comprise an annular member located on the nipple portion.

Following is a description, by way of example only and with reference to the accompanying drawings, of one method of carrying the invention into effect.

In the drawings:-

FIGURE 1 is an elevation, shown partly in cross section, of one embodiment of an assembly in accordance with the present invention, and

FIGURE 2 is an elevation, shown partly in cross section, of another embodiment of the assembly.

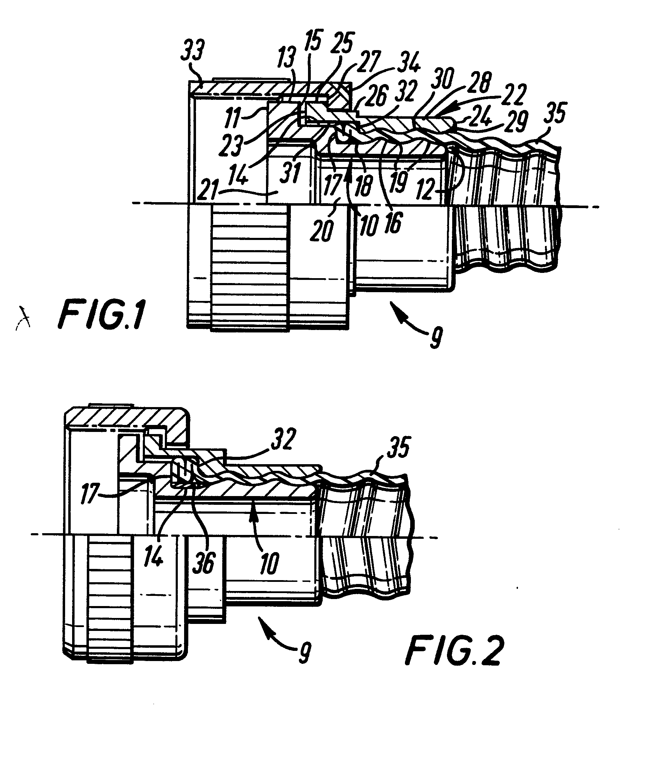

Referring to FIGURE 1 of the drawings, there is shown an end fitting assembly 9 comprising a nipple 10 having a front end wall 11 and a rear end wall 12. The nipple 10 is provided with a first outer circumferential surface 13 adjacent the front end wall 11, an intermediate outer circumferential surface 14 which is of smaller diameter than the portion having the first outer circumferential surface 13 thereby providing an abutment surface 15. The nipple 10 has a rear outer circumferential surface 16 of smaller diameter than the intermediate outer circumferential surface 14 thereby providing an abutment surface 17. The rear outer circumferential surface 16 is provided with a circumferential recess 18 adjacent the abutment surface 17 and a helical groove 19 extending axially rearwardly from the recess 18. The nipple 10 has a bore 20 which is enlarged at a forward end thereof thereby providing an inner circumferential recess 21.

The nipple 10 is adapted to co-operate with a sleeve 22 having a front end wall 23 and a rear end wall 24. The sleeve 22 has a first outer circumferential surface 25 adjacent the front end wall 23 and an intermediate outer circumferential surface 26 of reduceddiameter adjacent the first outer circumferential surface 25 thereby providing

- 6 -

an abutment surface 27. The sleeve 22 is provided with a rear outer circumferential surface 28 of smaller diameter than the intermediate circumferential surface 26. The sleeve 22 has a bore 29 provided with a helical groove 30. The bore 29 is enlarged at a forward end thereof thereby providing an inner circumferential recess 31 having a radial end wall 32.

The sleeve 22 is adapted to co-operate with a cylindrical nut 33 adapted to operate with a threaded component (not shown). The nut 33 is provided with an inwardly extending circumferential flange 34.

The assembly is adapted to engage a tubular member 35 of plastics material and having internal convolutions complimentary to the helical groove 19 of the nipple 10 and having external convolutions complimentary to the helical groove 30 of the sleeve 22.

The assembly 9 is assembled on an end portion of the tubular member 35 by screwing the sleeve 22 axially of the tubular member 35, the helical groove 30 of the sleeve 22 being engaged by the external convolutions of the tubular member 35, so that an end portion of the tubular member 35 extends axially from the front end wall 23 of the sleeve 22. The rear end wall 12 of the nipple 10 then is inserted into the bore of the end portion of the tubular member 35 and the nipple 10 is screwed into the tubular member 35 , the helical groove 19 being engaged by the internal convolutions of the tubular member 35.

When the abutment surface 17 of the nipple 10 engages an adjacent end wall of the tubular member 35 and the nipple 10 subsequently is screwed axially inwardly of the tubular member 35, the convolutions adjacent the end wall of the tubular member 35 are contracted axially and expanded radially outwardly. The sleeve 22 then is screwed on the tubular member 35 so that the end wall 32 of the sleeve 22 approaches the abutment surface 17 of the nipple 10. Continued rotation of the sleeve 22 in the same direction reduces the distance between the abutment surface 17 of the nipple 10 and the end wall 35 of the tubular member 35 until the axially contracted and radially expanded convolutions are clamped between the abutment surface 17 and the end wall 32. Rotation of the sleeve 22 is continued until the front end wall 23 of the sleeve 22 engages the abutment surface 15 of the nipple 10.

In this manner, the tubular member 35 is firmly gripped between the nipple 10 and the sleeve 22 and the nipple 10 and sleeve 22 are maintained in the clamping position by means of the nut 33 which is screwed on a component (not shown) whereby the flange 34 of the nut 33 engages the abutment surface 27 of the sleeve 22 thereby preventing relative axial movement of the nipple 10 and sleeve 22.

Referring now to FIGURE 2 of the drawings, there is shown the end fitting assembly 9 having inserted therein an annular seal 36 of deformable material, such as elastomeric material. The seal 36 is located on the intermediate outer circumferential surface 14 before the nipple 10 is screwed into the tubular member 35. When the assembly 9 is assembled on the end portion of the tubular member 35, the seal 36 provides a pressure tight seal between the convolutions clamped between the abutment surface 17 and the end wall 32 on the one hand and the nipple 10 on the other hand.

0014051

- 10 -

CLAIMS

1. An end fitting assembly for a convoluted conduit comprising:-

a nipple portion adapted for insertion into an end of said conduit,

an abutment surface on said nipple portion adapted to engage said conduit end,

a securing sleeve adapted to overlay said nipple portion entered into said conduit, and

engagement means acting between said nipple portion and said sleeve to draw said nipple portion and said sleeve together to clamp a rucked portion of the conduit between said sleeve and said abutment surface.

2.      An assembly as claimed in Claim 1 wherein there is provided means for limiting relative movement of the nipple portion and the sleeve when the rucked portion has been clamped.

3.      An assembly as claimed in Claim 2 wherein the limiting means comprises an additional abutment surface of the nipple portion and an abutment surface of the sleeve.

4.      An assembly as claimed in any one of the preceding claims wherein the engagement means is adapted to engage the sleeve.

5,      An assembly as claimed in Claim 4 wherein the engagement means comprises a flange for engagement with the sleeve.

6.      An assembly as claimed in Claim 5 wherein the engagement means comprises a cylindrical nut and the said flange extends radially inwardly of the nut.

7.      An assembly as claimed in any one of the preceding Claims wherein the nipple

- 12 -

portion and the sleeve are provided with convoluted surfaces for engagement with the
conduit.

8.       An assembly as claimed in any one
of the preceding Claims wherein the nipple
portion is provided with an inner circumferential
recess.

9.       An assembly as claimed in any one
of the preceding Claims wherein there is provided
sealing means for sealing the assembly and the
conduit.

10.       An assembly as claimed in Claim 9
wherein the sealing means comprises an annular
member located on the nipple portion.

0014051

FIG.1

FIG.2

European Patent
Office

**EUROPEAN SEARCH REPORT**

0014051

Application number

EP 80 30 0089

| | **DOCUMENTS CONSIDERED TO BE RELEVANT** | | **CLASSIFICATION OF THE APPLICATION (Int. Cl. 3)** |
|---|---|---|---|
| Category | Citation of document with indication, where appropriate, of relevant passages | Relevant to claim | |
| X | <u>GB - A - 734 265</u> (MILLAR)<br>* Page 2, line 128 - page 3, line 95 * | 1-7, 9, 10 | F 16 L 33/24<br>33/26 |
| X | <u>GB - A - 718 261</u> (MILLAR)<br>* Page 3, lines 37-115; page 4, line 106 - page 5, line 35 * | 1, 4, 6-10 | |
| | <u>GB - A - 946 135</u> (SUPERFLEXIT)<br>* Page 1, line 68 - page 2, line 74 * | 6-10 | **TECHNICAL FIELDS SEARCHED (Int.Cl. 3)**<br><br>F 16 L |
| | <u>CH - A - 361 446</u> (FREY)<br>* Page 2, lines 3-45; page 3, lines 1-10 * | 4-6 | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 18-04-1980 | ATKINS |

EPO Form 1503.1   06.78